# EUROPÄISCHE PATENTSCHRIFT

(11) **EP 2 604 948 B1**
(45) Veröffentlichungstag und Bekanntmachung des Hinweises auf die Patenterteilung: **08.10.2014**
(21) Anmeldenummer: 11455004.9
(22) Anmeldetag: 13.12.2011
(51) Int. Cl.: F24J 2/10, F24J 2/46, F24J 2/14, F24J 2/54

(54) **Rinnenförmiger Sonnenkollektor**
Trough shaped solar panel
Collecteur solaire en forme de cannelure

(43) Veröffentlichungstag der Anmeldung: 19.06.2013
(73) Patentinhaber: Kornmüller, Manfred, 3353 Seitenstetten (AT)
(72) Erfinder: Kornmüller, Manfred, 3353 Seitenstetten (AT)
(74) Vertreter: Hübscher, Helmut

(56) Entgegenhaltungen:
- EP-A1- 1 947 403
- WO-A1-02/103256
- WO-A2-2010/055397
- DE-U1-202008 014 174
- US-A- 4 422 614

## Beschreibung

Die Erfindung bezieht sich auf einen rinnenförmigen Sonnenkollektor mit einem Trägerrohr, an dem beidseitig abstehende, das Rinnenprofil durch eine Bogenform vorgebende und in Richtung des Trägerrohrs nebeneinandergereihte Tragsegmente für Spiegelsegmente befestigt sind, die sich an die Bogenform der Tragsegmente anschmiegen, wobei das Trägerrohr auf einander gegenüberliegenden Längsseiten zwei Anschlussflächen für die Tragsegmente besitzt, siehe WO-A-2010055397.

Zur vorteilhaften Ausnützung der Sonnenenergie ist es bekannt, rinnenförmige Sonnenkollektoren mit einem parabolförmigen Querschnitt einzusetzen und im Brennpunkt des parabolförmigen Querschnitts ein Absorberrohr vorzusehen, auf dem die an einer spiegelnden Auskleidung reflektierte Sonnenstrahlung fokussiert wird. Um Spiegelsegmente entsprechend der parabolischen Rinnenform anzuordnen und den rinnenförmigen Sonnenkollektor um eine zur Längsachse des Rinnenprofils parallele Achse dem Sonnenstand nachführen zu können, wird üblicherweise ein Traggestell mit einem die Schwenkwelle bildenden Trägerrohr vorgesehen, an dem beidseitig abstehende, das Rinnenprofil durch eine Bogenform vorgebende, in Richtung des Trägerrohrs nebeneinandergereihte Tragsegmente zur Aufnahme der Spiegel befestigt sind. Damit vorteilhafte Reflexionsverhältnisse mit einfachen Konstruktionsmitteln sichergestellt werden können, werden anstelle von beispielsweise gekrümmten Aluminiumtafeln dünnwandige, ebene Spiegelglassegmente eingesetzt, die in Bogenlängsrichtung stirnseitig mit einer Druckspannung beaufschlagt werden, sodass sie gegen die Trägersegmente hin ausgewölbt werden und sich an die das Rinnenprofil durch ihre Bogenform vorgebenden Trägersegmente anschmiegen. Zur Einhaltung der Parabolform bedarf es einer ausreichend steifen Abstützung der Spiegelglassegmente durch die Tragsegmente, die eine geeignete Aufnahme für die Spiegelglassegmente unter Berücksichtigung des Umstandes bilden müssen, dass die spiegelnde Beschichtung der Spiegelglassegmente vor Witterungseinflüssen geschützt wird. Zu diesem Zweck wird eine gesonderte Zwischenschicht zwischen den Spiegelglassegmenten und den Tragsegmenten vorgesehen. Nachteilig bei diesen bekannten rinnenförmigen Sonnenkollektoren ist vor allem, dass für das Einhalten geringer Herstellungstoleranzen für die Parabolform der Spiegelglassegmente eine vergleichsweise schwere Stützkonstruktion für die Tragsegmente erforderlich wird und für den Witterungsschutz der Spiegelglassegmente gesonderte Zwischenlagen vorzusehen sind.

Der Erfindung liegt somit die Aufgabe zugrunde, einen rinnenförmigen Sonnenkollektor der eingangs geschilderten Art so auszugestalten, dass eine einfache, leichte Bauweise sichergestellt werden kann, ohne auf eine ausreichende Stabilität und Formgenauigkeit des Sonnenkollektors verzichten zu müssen.

Die Erfindung löst die gestellte Aufgabe dadurch, dass die Tragsegmente eine gegen die Spiegelsegmente offene, faserverstärkte Kunststoffschale mit einer an der zugehörigen Anschlussfläche des Trägerrohrs befestigten Stirnwand bilden, und dass die Kunststoffschalen mit einem in sich geschlossenen, umlaufenden Randflansch und wenigstens einer in Bogenlängsrichtung verlaufenden, aus dem Schalenboden ausgewölbten Rippe versehen sind, die zumindest eine Quernut in der Stützfläche für die Spiegelsegmente aufweist.

Durch die Ausbildung der Tragsegmente als faserverstärkte Kunststoffschalen wird die Voraussetzung für eine gewichtssparende Konstruktion geschaffen, wobei die gegen die Spiegelsegmente offene, wannenförmige Schalenform mit dem umlaufenden Randflansch zur Aufnahme der Spiegelsegmente einen sicheren Witterungsschutz mit sich bringt, weil ja die Spiegelsegmente durch die an die Abmessungen der Spiegelsegmente angepassten Kunststoffschalen vollständig abgedeckt werden, wenn die Ränder der Spiegelsegmente am umlaufenden Randflansch der Kunststoffschale anliegen. Die wannenförmige Schalenform der Tragsegmente reicht allerdings noch nicht aus, um die Formstabilität der Spiegelsegmente bei den zu erwartenden Belastungen zu sichern. Die wannenförmigen Kunststoffschalen, die entsprechend dem Belastungsverlauf mit zunehmendem Abstand vom Trägerrohr eine geringere Tiefe aufweisen, sind zu diesem Zweck mit wenigstens einer zusätzlichen, in Bogenlängsrichtung verlaufenden Rippe versehen, die eine Abstützung für das Spiegelsegment zwischen den Randflanschen bildet. Diese Rippe ist außerdem mit wenigstens einer Quernut in der Stützfläche für die Spiegelsegmente versehen, um die Torsionssteifigkeit der Tragsegmente zu erhöhen. Die Nutwände diese Quernut bilden die hiefür notwendigen Aussteifungen. Schließlich müssen die Spiegelflächenbelastungen über die Tragsegmente auf das Trägerrohr abgetragen werden. Zur besseren Drehmomentabstützung weist das Trägerrohr auf einander gegenüberliegenden Längsseiten zwei Anschlussflächen für die Tragsegmente auf, deren Kunststoffschalen eine Stirnwand bilden, die mit der jeweiligen Anschlussfläche des Trägerrohrs vorzugsweise verklebt wird, was jedoch nicht zwingend ist.

Weisen die in Bogenlängsrichtung verlaufenden Rippen einen Abstand zu der Stirnwand der Kunststoffschale auf, so wird nicht nur die Torsionssteifigkeit der Kunststoffschale erhöht, sondern auch eine von dieser Rippe ungestörte Ausbildung der Stirnwand der Tragsegmente ermöglicht. Die Stirnwand der Kunststoffschale der Tragsegmente kann eine vorspringende, die zugehörige Anschlussfläche des Trägerrohrs übergreifende Anschlagschulter aufweisen, über die die einzelnen Tragsegmente genau gegenüber dem Trägerrohr positioniert werden können. Besonders einfache Konstruktionsverhältnisse ergeben sich in diesem Zusammenhang, wenn die auf einander gegenüberliegenden Längsseiten des Trägerrohrs vorgesehenen Anschlussflächen für die mit ebenen Stirnwänden versehenen Tragsegmente in zueinander geneigten Ebenen verlaufen. Die ebenen Anschlussflächen des Trägerrohrs geben die Anschlussrichtung vor, wobei die Anschlagschulter die Position der Tragsegmente gegenüber den Anschlussflächen des Trägerrohrs konstruktiv festlegt, sodass der Zusammenbau eines rinnenförmigen Sonnenkollektors aus dem Trägerrohr und den seitlich am Trägerrohr angesetzten Tragsegmenten für die Spiegelsegmente vor Ort einfach und genau vorgenommen werden kann.

Erweist sich die gegen die Spiegelsegmente offene Kunststoffschale bei besonderen Belastungsanforderungen als zu wenig torsionssteif, so können die Kunststoffschalen der Tragsegmente mit auf dem Randflansch und der Rippe aufgeklebten Platten je ein Hohlprofil bilden, das trotz eines vergleichsweise geringen Gewichts eine hohe Torsionssteifigkeit aufweist. Diese die offenen Kunststoffschalen abdeckenden, schubfest mit den Kunststoffschalen verbundenen Platten können eine flächige Auflage für die Spiegelsegmente bilden. Im Hinblick auf eine Gewichtsersparnis ergeben sich allerdings günstige Konstruktionsvoraussetzungen, wenn die Spiegelsegmente selbst die Platten bilden. Die Spiegelsegmente müssen allerdings in diesem Fall auf die Tragsegmente aufgeklebt werden, was das Auswechseln einzelner Spiegelsegmente erschwert.

Einfache Bedingungen für das Montieren und Auswechseln von Spiegelsegmenten werden dadurch möglich, dass die Spiegelsegmente aus Spiegelgläsern bestehen, die sich unter einer Druckvorspannung in Bogenlängsrichtung durchbiegen und an die Bogenform der Tragsegmente anschmiegen. Damit die für die Anlage der Spiegelsegmente an den vorzugsweise eine Parabolform vorgebenden, quer zum Trägerrohr verlaufenden Flanschabschnitten des Randflansches erforderliche Druckvorspannung stirnseitig auf die Spiegelsegmente aufgebracht werden kann, kann die Kunststoffschale der Tragsegmente im Bereich der in Richtung des Trägerrohres verlaufenden, einander gegenüberliegenden Flanschabschnitte des umlaufenden Randflansches Anschläge für die Stirnseiten der Spiegelsegmente und diesen Anschlägen gegenüberliegende die Stirnseiten des Spiegelsegmentes übergreifende Spannklemmen aufweisen, über die das Spiegelsegment unter einer Durchbiegung gegen die auf den gegenüberliegenden Stirnseiten vorgesehenen Anschläge gedrückt wird. Diese Anschläge können feststehend ausgebildet sein. Es ist aber auch möglich, die Anschläge für die Stirnseiten der Spiegelsegmente durch Spannklemmen zu bilden, was für die einander gegenüberliegenden Spannklemmen geringere Verstellwege mit sich bringt. Wird eine Platte zur Torsionsversteifung der Kunststoffschalen eingesetzt, so werden die Spiegelsegmente über die Spannklemmen gegen diese Platten gedrückt, die die geforderte Spiegelform aufgrund des Randflanschverlaufs der Tragsegmente vorgeben.

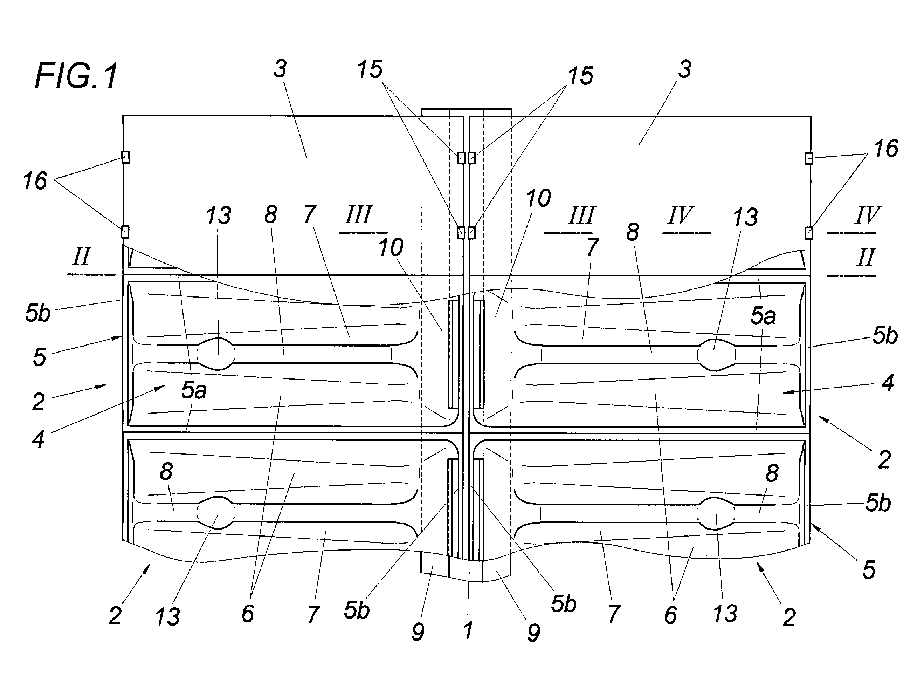

In der Zeichnung ist der Erfindungsgegenstand beispielsweise dargestellt. Es zeigen
- Fig. 1: einen erfindungsgemäßen, rinnenförmigen Sonnenkollektor ausschnittsweise in einer zum Teil aufgerissenen Draufsicht,
- Fig. 2: diesen Sonnenkollektor in einem Schnitt nach der Linie II-II der Fig. 1 in einem größeren Maßstab,
- Fig. 3: den Anschluss eines Tragsegmentes an das Trägerrohr in einem achsnormalen Schnitt in einem größeren Maßstab,
- Fig. 4: eine Spannklemme für die vom Trägerrohr abgekehrte Stirnseite eines Spiegelsegmentes in einem größeren Maßstab und die
- Fig. 5: bis 7 die Kunststoffschale der Tragsegmente in parallelen Schnitten nach den Linien V-V, VI-VI und VII-VII der Fig. 2 in einem größeren Maßstab.

Der dargestellte rinnenförmige Sonnenkollektor weist ein in Rinnenlängsrichtung verlaufendes Trägerrohr 1 und an das Trägerrohr 1 beidseitig angesetzte, die vorzugsweise parabolförmige Bogenform des Rinnenprofils bestimmende Tragsegmente 2 für Spiegelsegmente 3 auf, die sich an den Bogenverlauf der formbestimmenden Tragsegmente 2 anschmiegen.

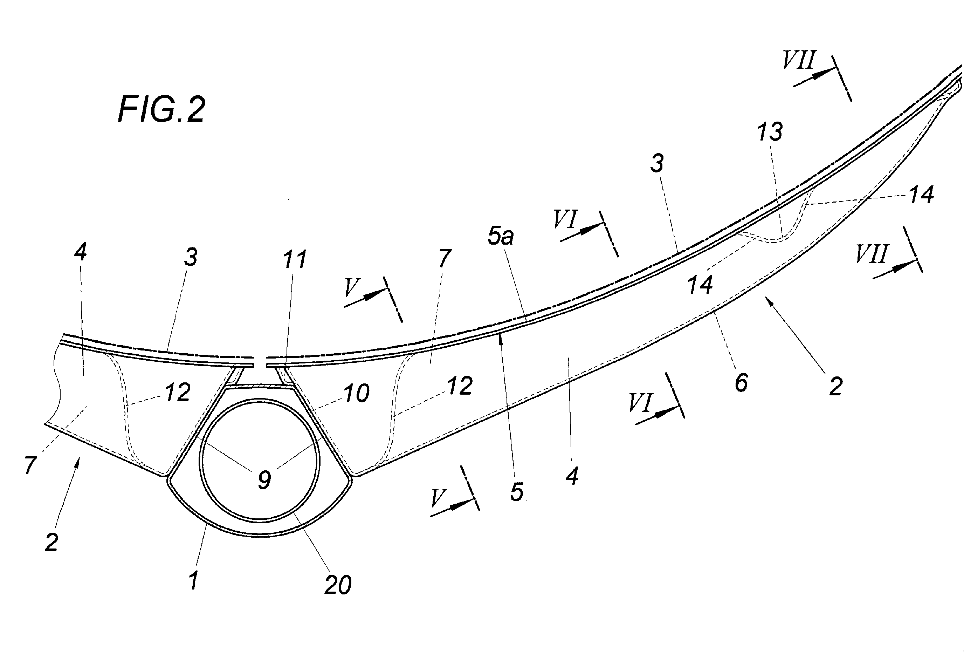

Die in Längsrichtung des Trägerrohrs 1 unmittelbar nebeneinandergereihten Tragsegmente 2 werden durch gegen die Spiegelsegmente 3 offene, faserverstärkte Kunststoffschalen 4 gebildet, die einen in sich geschlossenen umlaufenden Randflansch 5 zur Aufnahme der Spiegelsegmente 3 und zwischen den quer zum Trägerrohr 1 verlaufenden Flanschabschnitten 5a wenigstens eine in Bogenlängsrichtung verlaufende, aus dem Schalenboden 6 ausgewölbte Rippe 7 zur zusätzlichen Abstützung der Spiegelsegmente 3 zwischen den Flanschabschnitten 5a aufweisen. Die Randflanschabschnitte 5a sowie die die Spiegelsegmente 3 aufnehmenden Stützflächen 8 der Rippen 7 bestimmen mit ihrem Längsverlauf die Querschnittsform des Sonnenkollektors, wie dies insbesondere der Fig. 2 entnommen werden kann.

Zur Befestigung der Tragsegmente 2 ist das Trägerrohr 1 mit ebenen Anschlussflächen 9 versehen, an denen die Kunststoffschalen 4, die wie das aus Kunststoff gefertigte Trägerrohr 1 vorzugsweise mit Kohlenstofffasern verstärkt sind, angeklebt werden. Zu diesem Zweck bilden die Kunststoffschalen 4 der Trägersegmente 2 dem Trägerrohr 1 zugekehrte, ebene Stirnwände 10, die flächig an den Anschlussflächen 9 des Trägerrohres 1 anliegen, sodass über die ebenen Stirnwände 10 der Kunststoffschalen 4 nicht nur in Verbindung mit den Anschlussflächen 9 des Trägerrohrs 1 die Anschlussrichtung für die Tragsegmente 2 konstruktiv vorgegeben wird, sondern auch eine vorteilhafte Drehmomentabstützung der Tragsegmente 2 am Trägerrohr 1 unter Wahrung einer ausreichenden Klebefläche erreicht wird. Obwohl im Ausführungsbeispiel die beidseitig vom Trägerrohr 1 abstehenden Tragsegmente 2 gesonderte Bauteile bilden, was die Handhabung erleichtert, ist dies nicht zwingend. So könnten die einander bezüglich des Trägerrohrs 1 einander gegenüberliegenden Tragsegmente 2 auch miteinander verbunden sein.

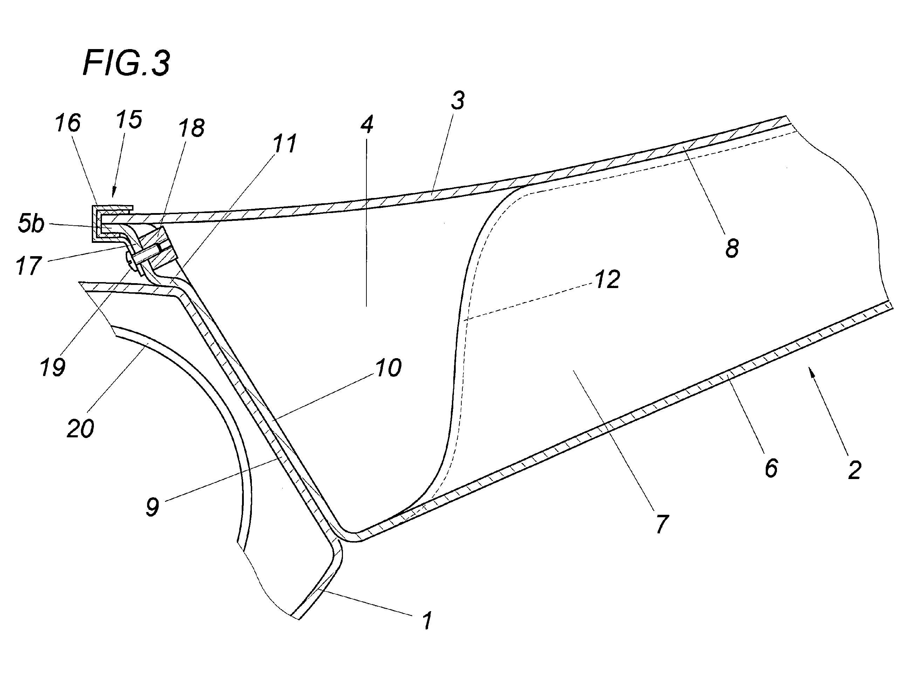

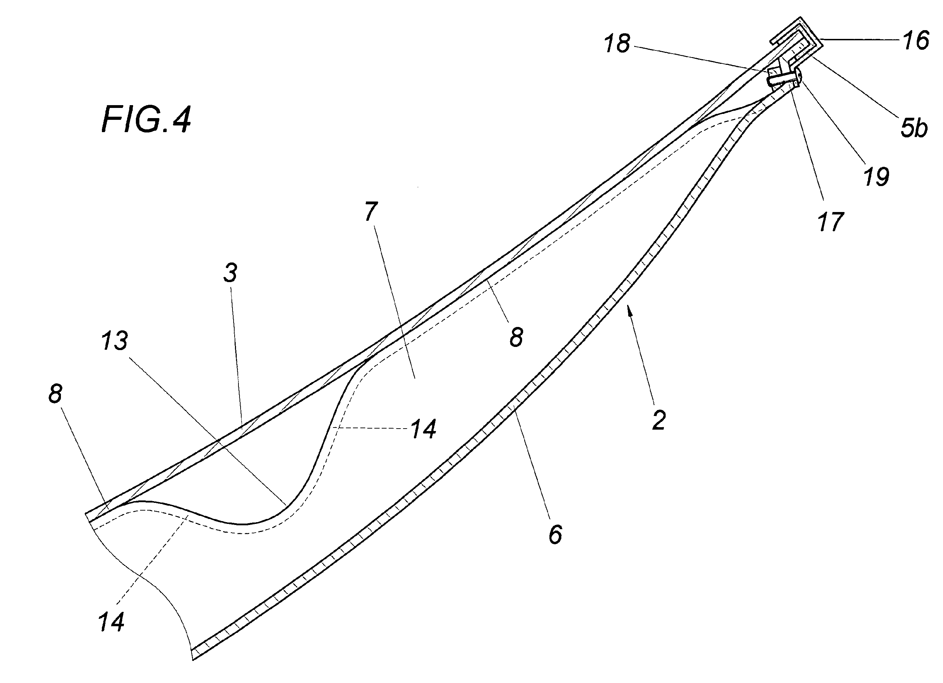

Wie sich vor allem aus der Fig. 3 erkennen lässt, wird die ebene Stirnwand 10 der Kunststoffschalen 4 durch eine vorspringende Anschlagschulter 11 begrenzt, die die zugehörige Anschlussfläche 9 des Trägerrohrs 1 übergreift. In der gezeichneten Anschlagstellung ist daher die Positionierung der Tragsegmente 2 gegenüber dem Trägerrohr 1 konstruktiv genau vorgegeben, was den Zusammenbau des Sonnenkollektors vor Ort vereinfacht. Aus der Fig. 3 kann außerdem entnommen werden, dass die aus dem Schalenboden 6 ausgewölbte Rippe 7 mit Abstand vor der ebenen Stirnwand 10 endet. Diese Maßnahme dient einerseits zu einem von der Rippe 7 ungestörten Verlauf der ebenen Stirnwand 10 und anderseits zur Erhöhung der Torsionssteifigkeit der Kunststoffschale 4 bezüglich einer in Bogenlängsrichtung verlaufenden Achse aufgrund der quer zu dieser Achse verlaufenden Stirnwand 12 der Rippe 7. Gemäß der Fig. 4 bildet die Rippe 7 der Kunststoffschalen 4 wenigstens eine Quernut 13 in der Stützfläche 8. Diese Quernut 13 verbessert mit ihren Nutwänden 14 ebenfalls die Torsionssteifigkeit der Kunststoffschalen 4.

Wie bereits ausgeführt wurde, nehmen die Spiegelsegmente 3 die gewünschte Profilform aufgrund des Anschmiegens an die Kunststoffschalen 4 der Tragsegmente 2 ein. Zu diesem Zweck können die aus dünnwandigen Spiegelgläsern gefertigten Spiegelsegmente 3 unter einer entsprechenden Durchbiegung an den Randflanschen 5 und der Stützfläche 8 der Rippen 7 angeklebt werden, was den Vorteil mit sich bringt, dass die offene Kunststoffschale 4 zu einem Hohlprofil mit einer entsprechend höheren Torsionssteifigkeit ergänzt wird. Nachteilig ist allerdings, dass mit der Verklebung zwischen den Spiegelsegmenten 3 und den Kunststoffschalen 4 das Auswechseln der Spiegelsegmente 3 erschwert wird.

Werden die Spiegelsegmente 3 vorzugsweise in Form dünnwandiger Spiegelgläser mit einer Druckspannung in Bogenlängsrichtung beaufschlagt, um mit der durch diese Beaufschlagung einhergehenden Durchbiegung ein Anschmiegen der Spiegelsegmente 3 an die Kunststoffschalen 4 sicherzustellen, so braucht zum Lösen der Spiegelsegmente 3 von den Kunststoffschalen 4 lediglich die Druckspannung aufgehoben zu werden.

Zur Druckbeaufschlagung der Spiegelsegmente 3 können die Kunststoffschalen 4 im Bereich der in Richtung des Trägerrohrs 1 verlaufenden, einander gegenüberliegenden Flanschabschnitte 5b des umlaufenden Randflansches 5 Anschläge 15 für die Stirnseiten der Spiegelsegmente 3 und diesen Anschlägen 15 gegenüberliegende, die Stirnseiten der Spiegelglassegmente 3 übergreifende Spannklemmen 16 aufweisen, wobei die Anschläge 15 ebenfalls in Form von Spannklemmen 16 ausgebildet sein können, wie dies der Fig. 3 entnommen werden kann. Mit Hilfe der Spannklemmen 16 kann auf die Spiegelsegmente 3 eine Druckvorspannung in Bogenlängsrichtung der Tragsegmente 2 ausgeübt werden, sodass sich die Spiegelsegmente 3 gegen die offenen Kunststoffschalen 4 durchbiegen und an den Randflansch 5 sowie die Rippe 7 anlegen und dabei die durch den Verlauf des Randflansches 5 und der Rippe 7 vorgegebene parabolförmige Form einnehmen. Mit dem Andrücken der Spiegelsegmente 3 an den umlaufenden Randflansch 5 wird zwischen der Kunststoffschale 4 der Tragsegmente 2 und dem Rand der Spiegelsegmente 3 eine dichte Verbindung geschaffen, die die spiegelnde Beschichtung der als Spiegelgläser ausgebildeten Spiegelsegmente 3 auf der der Kunststoffschale 4 zugekehrten Glasseite vor äußeren Einflüssen abschirmt. Soll trotz einer solchen Aufspannung der Spiegelgläser eine höhere Torsionssteifigkeit für die Kunststoffschalen 4 erzielt werden, so kann die Kunststoffschale 4 durch eine gesonderte Platte zu einem Hohlprofil ergänzt werden.

Die Fig. 3 und 4 zeigen, dass die Spannklemmen 16 vorzugsweise im Bereich von Versteifungen der Kunststoffschale 4 angeordnet werden. Diese Versteifungen können durch abgewinkelte Wandabschnitte 17 der Kunststoffschalen 4 im Bereich der Flanschabschnitte 5b gebildet werden, wie sie sich beispielsweise durch die Anschlagschulter 11 auf der Seite des Trägerrohrs 1 ergeben. Im Bereich des gegenüberliegenden Flanschabschnitts 5b ist gemäß der Fig. 4 ein ähnlich abgewinkelter Wandabschnitt 17 angedeutet. Diese Wandabschnitte 17 tragen auf der Innenseite der Kunststoffschalen 4 Stücke 18 mit Muttergewinden, in die Spannschrauben 19 für die Spannklemmen 16 eingreifen. Mit dem Anziehen der Spannschrauben 19 werden die Spiegelsegmente 3 mit der für die Formgebung und das dichte Anpressen an die Kunststoffschale 4 erforderlichen Druckvorspannung beaufschlagt. Eine elastomere Auskleidung der Spannklemmen 16 verhindert eine örtliche Überlastung der Stirnseiten der Spiegelsegmente 3 im Bereich der Spannklemmen 16.

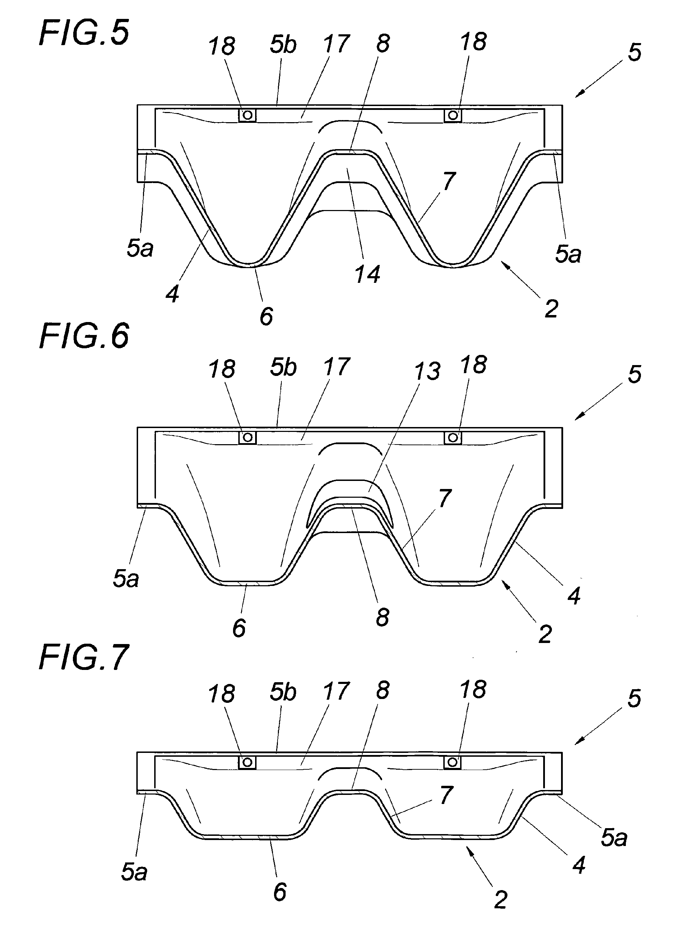

Aus den Fig. 5 bis 7 geht in Verbindung mit der Fig. 2 hervor, dass die wannenförmigen Kunststoffschalen 4 eine mit der Entfernung vom Trägerrohr 1 abnehmende Tiefe aufweisen, sodass das von der Wannentiefe abhängige Trägheitsmoment an die mit der Entfernung vom Trägerrohr 1 abnehmende Belastung der Tragsegmente 2 vorteilhaft angepasst ist. Es können daher vergleichsweise leichte und einfach zu handhabende Bauteile zum Einsatz kommen, die den modulartigen Zusammenbau des Sonnenkollektors vor Ort erheblich erleichtern. Die Schwenkverstellung des Sonnenkollektors über das Trägerrohr 1 bleibt trotz der ebenen Anschlussflächen 9 für die Tragsegmente 2 gewahrt, weil ja in das im Wesentlichen einen trapezförmgen Querschnitt aufweisende Profilrohr des Tragrohrs endseitig lediglich Lagerhülsen 20 zur Aufnahme einer Antriebswelle einzusetzen sind.

## Patentansprüche

1. Rinnenförmiger Sonnenkollektor mit einem Trägerrohr (1), an dem beidseitig abstehende, das Rinnenprofil durch eine Bogenform vorgebende und in Richtung des Trägerrohrs (1) nebeneinandergereihte Tragsegmente (2) für Spiegelsegmente (3) befestigt sind, die sich an die Bogenform der Tragsegmente (2) anschmiegen, wobei das Trägerrohr (1) auf einander gegenüberliegenden Längsseiten zwei Anschlussflächen (9) für die Tragsegmente (2) besitzt, **dadurch gekennzeichnet, dass** die Tragsegmente (2) eine gegen die Spiegelsegmente (3) offene, faserverstärkte Kunststoffschale (4) mit einer an der zugehörigen Anschlussfläche (9) des Trägerrohrs (1) befestigten Stirnwand (10) bilden, und dass die Kunststoffschalen (4) mit einem in sich geschlossenen, umlaufenden Randflansch (5) und wenigstens einer in Bogenlängsrichtung verlaufenden, aus dem Schalenboden (6) ausgewölbten Rippe (7) versehen sind, die zumindest eine Quernut (13) in der Stützfläche (8) für die Spiegelsegmente (3) aufweist.

2. Rinnenförmiger Sonnenkollektor nach Anspruch 1, **dadurch gekennzeichnet, dass** die in Bogenlängsrichtung verlaufende Rippe (7) mit Abstand vor der Stirnwand (10) der Kunststoffschale (4) endet.

3. Rinnenförmiger Sonnenkollektor nach Anspruch 1 oder 2, **dadurch gekennzeichnet, dass** die Stirnwand (10) der Kunststoffschale (4) der Tragsegmente (2) durch eine vorspringende, die zugehörige Anschlussfläche (9) des Trägerrohrs (1) übergreifende Anschlagschulter (11) begrenzt ist.

4. Rinnenförmiger Sonnenkollektor nach einem der Ansprüche 1 bis 3, **dadurch gekennzeichnet, dass** die auf einander gegenüberliegenden Längsseiten des Trägerrohrs (1) vorgesehenen Anschlussflächen (9) für die mit ebenen Stirnwänden (10) versehenen Tragsegmente (2) in zueinander geneigten Ebenen verlaufen.

5. Rinnenförmiger Sonnenkollektor nach einem der Ansprüche 1 bis 4, **dadurch gekennzeichnet, dass** die Kunststoffschalen (4) der Tragsegmente (2) mit auf dem Randflansch (5) und der Rippe (7) aufgeklebten Platten je ein Hohlprofil bilden.

6. Rinnenförmiger Sonnenkollektor nach Anspruch 5, **dadurch gekennzeichnet, dass** die Spiegelsegmente (4) die Platten bilden.

7. Rinnenförmiger Sonnenkollektor nach einem der Ansprüche 1 bis 5, **dadurch gekennzeichnet, dass** die Spiegelsegmente aus Spiegelgläsern bestehen, die sich unter einer Druckvorspannung in Bogenlängsrichtung an die Bogenform der Tragsegmente (2) anschmiegen.

8. Rinnenförmiger Sonnenkollektor nach Anspruch 7, **dadurch gekennzeichnet, dass** die Kunststoffschale (4) der Tragsegmente (2) im Bereich der in Richtung des Trägerrohres (1) verlaufenden, einander gegenüberliegenden Flanschabschnitte (5b) des umlaufenden Randflansches (5) Anschläge (15) für die Stirnseiten der aus Spiegelgläsern gefertigten Spiegelsegmente (3) und diesen Anschlägen (15) gegenüberliegende, die Stirnseiten der Spiegelsegmente (3) übergreifende Spannklemmen (16) aufweist.

9. Rinnenförmiger Sonnenkollektor nach Anspruch 8, **dadurch gekennzeichnet, dass** die Anschläge (15) für die Stirnseiten der Spiegelsegmente (3) durch Spannklemmen (16) gebildet sind.

## Claims

1. Trough-shaped solar collector having a support tube (1) to which are attached support segments (2) for mirror segments (3), which support segments protrude on both sides, define the trough profile by an arcuate shape and are arranged in series next to each other in the direction of the support tube (1), which mirror segments hug the arcuate shape of the support segments (2), wherein, on mutually opposing long sides, the support tube (1) has two connection surfaces (9) for the support segments (2), **characterised in that** the support segments (2) form a fibre-reinforced synthetic material shell (4) which is open towards the mirror segments (3) and has an end wall (10) attached to the associated connection surface (9) of the support tube (1), and that the synthetic material shells (4) are provided with a closed peripheral edge flange (5) and at least one rib (7) extending in the longitudinal direction of the arc and bulging out of the shell floor (6), which rib has at least one transverse groove (13) in the support surface (8) for the mirror segments (3).

2. Trough-shaped solar collector as claimed in claim 1, **characterised in that** the rib (7) extending in the longitudinal direction of the arc ends at a distance in front of the end wall (10) of the synthetic material shell (4).

3. Trough-shaped solar collector as claimed in claim 1 or 2, **characterised in that** the end wall (10) of the synthetic material shell (4) of the support segments (2) is delimited by a protruding stop shoulder (11) engaging over the associated connection surface (9) of the support tube (1).

4. Trough-shaped solar collector as claimed in any one of claims 1 to 3, **characterised in that** the connection surfaces (9), provided on mutually opposing long sides of the support tube (1), for the support segments (2) provided with planar end walls (10) extend in planes which are inclined with respect to one another.

5. Trough-shaped solar collector as claimed in any one of claims 1 to 4, **characterised in that** the synthetic material shells (4) of the support segments (2) each form a hollow profile with plates adhered to the edge flange (5) and the rib (7).

6. Trough-shaped solar collector as claimed in claim 5, **characterised in that** the mirror segments (4) form the plates.

7. Trough-shaped solar collector as claimed in any one of claims 1 to 5, **characterised in that** the mirror segments consist of mirror glasses which hug the arcuate shape of the support segments (2) under compressive prestressing in the longitudinal direction of the arc.

8. Trough-shaped solar collector as claimed in claim 7, **characterised in that**, in the region of the mutually opposing flange portions (5b) of the peripheral edge flange (5), which extend in the direction of the support tube (1), the synthetic material shell (4) of the support segments (2) has stops (15) for the end faces of the mirror segments (3) produced from mirror glasses, and has tension clamps (16) opposite these stops (15) and engaging over the end faces of the mirror segments (3).

9. Trough-shaped solar collector as claimed in claim 8, **characterised in that** the stops (15) are formed for the end faces of the mirror segments (3) by tension clamps (16).

## Revendications

1. Collecteur solaire en forme de cannelure avec un tube de support (1), au niveau duquel sont fixés, pour des segments de miroir (3), des segments de support (2) dépassant de part et d'autre, créant le profil en rigole par une forme arquée, placés l'un à côté de l'autre, dans le sens du tube de support (1) qui épousent la forme arquée des segments de support (2), le tube de support (1) possédant sur ses côtés longitudinaux opposés l'un à l'autre, deux faces de raccordement (9) pour les segments de support (2), **caractérisé en ce que** les segments de support (2) forment une coque en matière plastique (4) renforcée de fibres, ouverte par rapport aux segments de miroir (3), avec une paroi frontale (10) fixée au niveau de la face de raccordement (9) concernée du tube de support (1), et **en ce que** les coques en matière plastique (4) sont munies d'une bride périphérique (5) fermée et d'au moins une nervure (7) incurvée à partir du fond de coque (6) et placée dans le sens longitudinal de l'arc, qui présente au moins une rainure transversale (13) dans la face d'appui (8) pour les segments de miroir (3).

2. Collecteur solaire en forme de cannelure selon la revendication 1, **caractérisé en ce que** la nervure (7) située dans le sens longitudinal de l'arc se termine avec un espace devant la paroi frontale (10) de la coque en matière plastique (4).

3. Collecteur solaire en forme de cannelure selon la revendication 1 ou 2, **caractérisé en ce que** la paroi frontale (10) de la coque en matière plastique (4) des segments de support (2) est limitée par un épaulement de butée (11) en saillie, empiétant sur la face de raccordement (9) concernée du tube de support (1).

4. Collecteur solaire en forme de cannelure selon l'une des revendications 1 à 3, **caractérisé en ce que** les faces de raccordement (9) prévues sur les côtés longitudinaux opposés l'un à l'autre du tube de support (1) sont situées, pour les segments de support (2) munis de parois frontales (10) planes, dans des plans inclinés l'un par rapport à l'autre.

5. Collecteur solaire en forme de cannelure selon l'une des revendications 1 à 4, **caractérisé en ce que** les coques en matière plastique (4) des segments de support (2) forment avec des plaques collées sur la bride périphérique (5) et la nervure (7), à chaque fois, un profilé creux.

6. Collecteur solaire en forme de cannelure selon la revendication 5, **caractérisé en ce que** les segments de miroir (4) forment les plaques.

7. Collecteur solaire en forme de cannelure selon l'une des revendications 1 à 5, **caractérisé en ce que** les segments de miroir sont composés de verres-miroirs qui épousent, sous une précontrainte de pression dans le sens longitudinal de l'arc, la forme arquée des segments de support (2).

8. Collecteur solaire en forme de cannelure selon la revendication 7, **caractérisé en ce que** la coque en matière plastique (4) des segments de support (2) présente dans la zone des sections de bride (5b) opposées l'une à l'autre, situées en direction du tube de support (1), de la bride périphérique (5), des butées (15) pour les côtés frontaux des segments de miroir (3) fabriqués à partir de verres-miroirs et des pinces de serrage (16) empiétant sur les côtés frontaux des segments de miroir (3), opposées à ces butées (15).

9. Collecteur solaire en forme de cannelure selon la revendication 8, **caractérisé en ce que** les butées (15) sont formées pour les côtés frontaux des segments de miroir (3) par des pinces de serrage (16).
